# EUROPEAN PATENT APPLICATION

(11) **EP 4 495 367 A1**
(43) Date of publication of application: **22.01.2025**
(21) Application number: 23770146.1
(22) Date of filing: 02.02.2023
(51) Int. Cl.: E06B 3/66, C03C 27/06

(54) **MULTI-LAYERED GLASS AND FITTING**

(30) Priority: 15.03.2022 JP 2022040045
(71) Applicant: LIXIL Corporation, Tokyo 141-0033 (JP)
(72) Inventor: TOYOSHIMA, Yukie, Tokyo 141-0033 (JP); KITAHARA, Etsushi, Tokyo 141-0033 (JP)
(74) Representative: karo IP
(86) International application number: PCT/JP2023/003406
(87) International publication number: WO 2023/176184

(57) **Abstract**

Provided is a multi-layered glass which is strong enough to constitute a fitting without a frame and with which adequate heat insulation properties can be ensured. This multi-layered glass 20, 30, 40 comprises at least two glass plates arranged via a spacer 24, 34, 44, the multi-layered glass 20, 30, 40 comprising a reinforcing member 25, 35, 45 which is disposed at end parts in the width direction and formed from carbon fiber-reinforced plastic, wherein the reinforcing member 25, 35, 45 has a width face reinforcing part 251, 351, 451, 253, 353, 453 disposed along the width face on the outer side in the depth direction at end parts in the width direction of the multi-layered glass 20, 30, 40, and has a depth face reinforcing part 252, 352, 452 formed continuously to the width face reinforcing part 251, 351, 451, 253, 353, 453 and disposed along the depth face at end parts in the width direction of the multi-layered glass.

## Description

### TECHNICAL FIELD

The present invention relates to a multi-layered glass and a fitting.

### BACKGROUND ART

Conventionally, from the viewpoint of improving heat insulating properties and soundproof properties, a multi-layered glass has been used as a glass window disposed in an opening of a building. The multi-layered glass includes, for example, at least two glass plates and a spacer. The spacer is disposed along a peripheral portion between the two glass plates, and separates the two glass plates from each other.

In the case of constructing a fitting such as a sliding window including the multi-layered glass, it is common to fit the multi-layered glass to stiles assembled into a rectangular frame. In this way, a sufficient strength as a fitting can be obtained. On the other hand, as a technique for imparting shape maintainability and long-term durability to the multi-layered glass itself, there is a disclosed technique in which a resin spacer or a metal spacer is disposed in a space between glass plates, in addition to the conventional spacer (for example, see Patent Document 1).

### Citation List

### Patent Document

Patent Document 1: Japanese Unexamined Patent Application, Publication No. 2006-273705

### DISCLOSURE OF THE INVENTION

### Problems to be Solved by the Invention

From the viewpoint of improving the design properties, it is preferable to construct a fitting without a stile, increasing the strength of the multi-layered glass. However, in a case where the resin spacer is simply disposed as disclosed in Patent Document 1 in order to improve the design properties, the resultant fitting cannot have a sufficient strength. On the other hand, in a case of disposing a metal spacer, there is a disadvantage that the heat insulating properties of the fitting deteriorate.

The present disclosure has been achieved in view of the above-described circumstances, and an object of the present disclosure is to provide a multi-layered glass that has a strength allowing for construction of a fitting without a stile and that is capable of ensuring heat insulating properties.

### Means for Solving the Problems

The present disclosure relates to a multi-layered glass in which at least two glass plates are arranged with a spacer interposed therebetween, and which includes a reinforcing member constituted by carbon fiber-reinforced plastic and disposed at an end portion in a widthwise direction of the multi-layered glass. The reinforcing member includes a widthwise surface reinforcing portion that is disposed externally with respect to a depth-wise direction along a widthwise surface at the end portion in the widthwise direction of the multi-layered glass, and a depth-wise surface reinforcing portion that is continuous with the widthwise surface reinforcing portion and disposed along a depth-wise surface at the end portion in the widthwise direction of the multi-layered glass.

### BRIEF DESCRIPTION OF THE DRAWINGS

FIG. 1 is a front view of a panorama window according to a first embodiment as viewed from an interior side;
FIG. 2 is a cross-sectional view taken along line A-A in FIG. 1, and illustrating a state in which a panorama window is in a closed position;
FIG. 3 is a cross-sectional view of the panorama window that has been moved to an intermediate position from the closed position illustrated in FIG. 2;
FIG. 4 is a cross-sectional view of the panorama window that has been moved to an open position from the intermediate position illustrated in FIG. 3;
FIG. 5 is a transverse cross-sectional view illustrating, on an enlarged scale, outer end portions in a lateral direction of a parallelly movable panel assembly, a slidably movable panel assembly, and a FIX panel assembly;
FIG. 6 is a diagram illustrating a process for compressing the parallelly movable panel assembly in a depth-wise direction and attaching reinforcing members;
FIG. 7 is a transverse cross-sectional view illustrating details of a sheet-shaped airtight member;
FIG. 8 is a diagram illustrating a modification of airtight members provided in joining portions between the parallelly movable panel assembly, the slidably movable panel assembly, and the FIX panel assembly;
FIG. 9 is a transverse cross-sectional view illustrating, on an enlarged scale, a joining portion between a parallelly movable panel assembly and a slidably movable panel assembly according to a second embodiment;
FIG. 10 is a transverse cross-sectional view illustrating, on an enlarged scale, a joining portion between a parallelly movable panel assembly and a slidably movable panel assembly according to a third embodiment; and
FIG. 11 is a transverse cross-sectional view illustrating, on an enlarged scale, a joining portion between a parallelly movable panel assembly and a slidably movable panel assembly according to a fourth embodiment.

### PREFERRED MODE FOR CARRYING OUT THE INVENTION

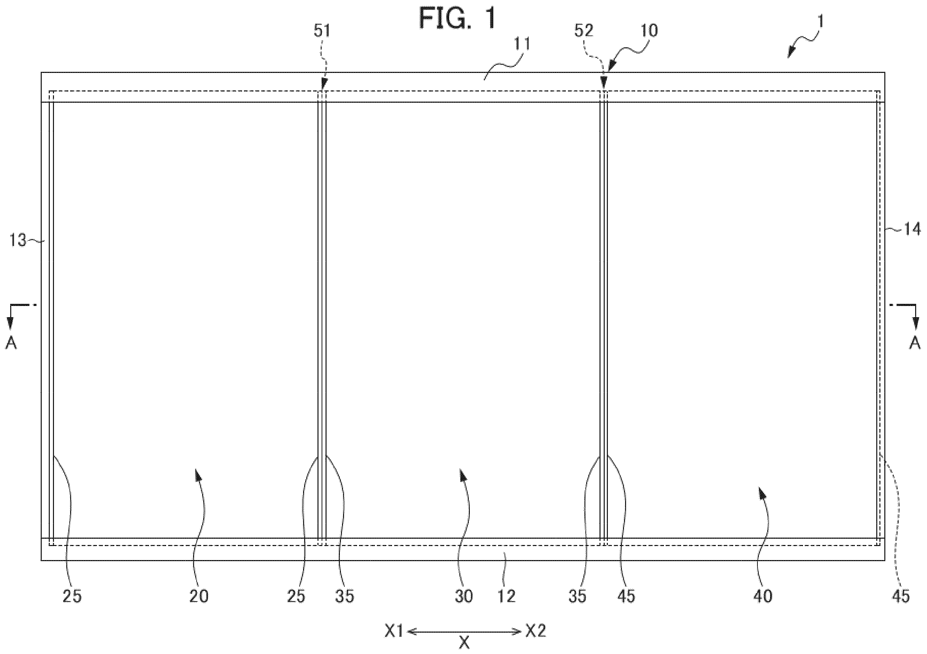

A panorama window 1 as a fitting according to a first embodiment will be described with reference to the drawings. As illustrated in FIG. 1, the panorama window 1 includes a frame assembly 10, and a parallelly movable panel assembly 20, a slidably movable panel assembly 30, and a FIX panel assembly 40 that are disposed in the frame assembly 10. Each of the parallelly movable panel assembly 20, the slidably movable panel assembly 30, and the FIX panel assembly 40 constitutes a multi-layered glass according to the present disclosure. In the present embodiment, each of the parallelly movable panel assembly 20 (sash), the slidably movable panel assembly 30 (sash), and the FIX panel assembly 40 (sash) includes the multi-layered glass.

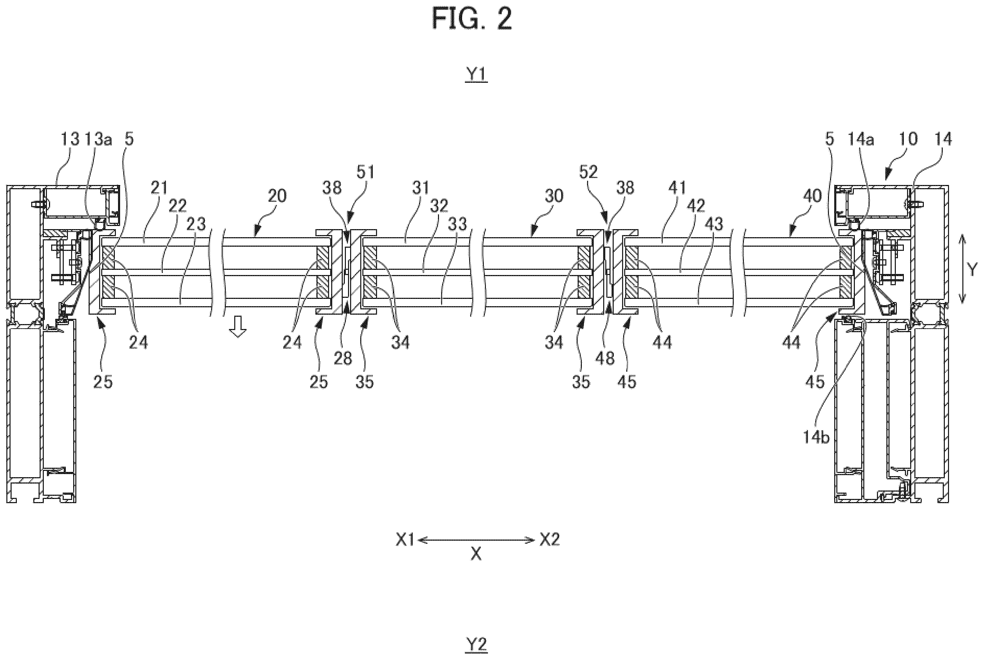

In the present specification, the term "widthwise direction" means a plane direction of the parallelly movable panel assembly 20, the slidably movable panel assembly 30, and the FIX panel assembly 40 accommodated in the frame assembly 10 of a fitting, and the term "depth-wise direction" means an interior-exterior direction (i.e., a depth direction). Furthermore, in the widthwise direction, a left-right direction in FIG. 1 is referred to as a lateral direction X. In FIG. 1, one side (left side) in the lateral direction X is referred to as an X1 side, and the other side (right side) in the lateral direction X is referred to as an X2 side. Furthermore, the interior-exterior direction in FIGS. 2 to 5 is referred to as a depth-wise direction Y. In the depth-wise direction Y, the side facing away from the viewer is referred to as an exterior side Y1 and a side facing the viewer is referred to as an interior side Y2. A "widthwise surface" refers to each surface of the panorama window 1 facing the exterior side Y1 or the interior side Y2, and a "depth-wise surface" refers to each surface of the panorama window 1 extending in the depth-wise direction Y (interior-exterior direction).

As illustrated in FIG. 1, the frame assembly 10 includes an upper frame 11, a lower frame 12, and a pair of vertical frames 13 and 14, which are assembled in a rectangular frame shape. The upper frame 11, the lower frame 12, and the pair of vertical frames 13 and 14 are each formed by extruding aluminum, for example. In the frame assembly 10, the parallelly movable panel assembly 20, the slidably movable panel assembly 30, and the FIX panel assembly 40 are disposed.

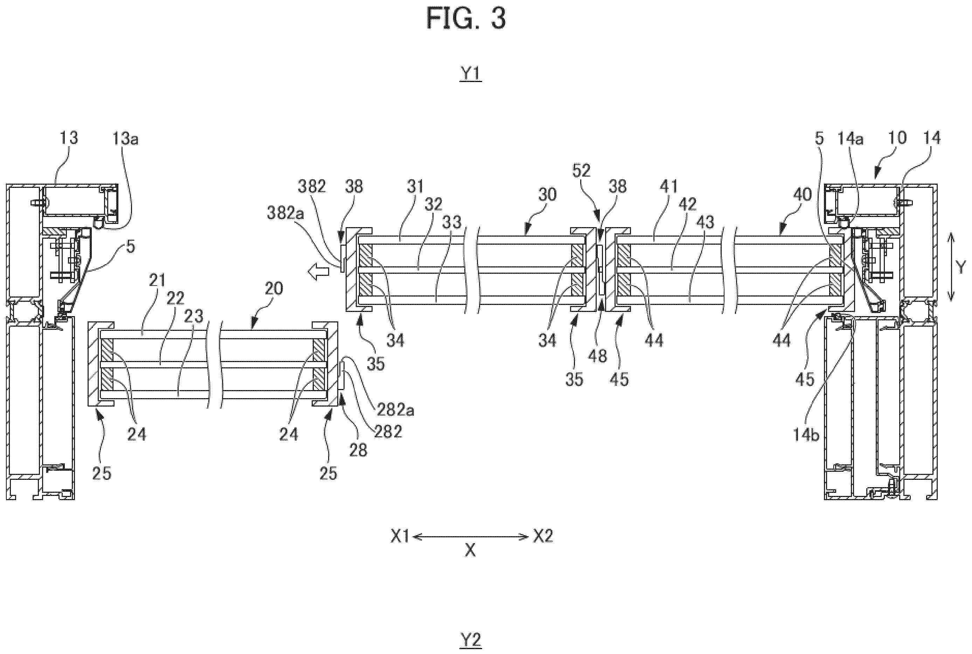

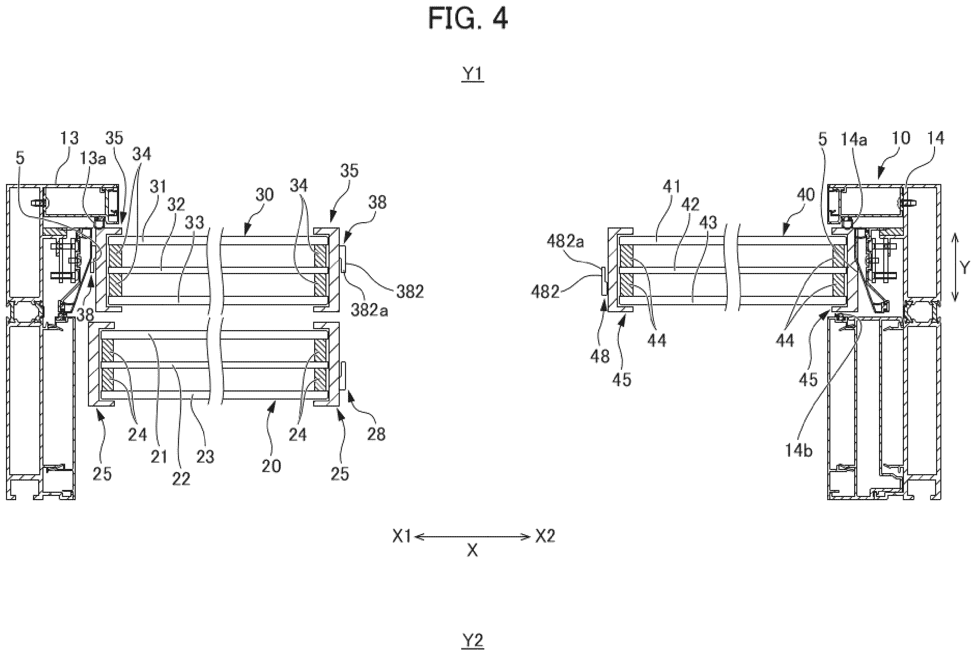

As illustrated in FIGS. 2 to 4, the FIX panel assembly 40 is fixed to a portion located in the frame assembly 10 and close to the X2 side in the lateral direction X. The parallelly movable panel assembly 20 and the slidably movable panel assembly 30 can be moved in a space within the frame assembly 10 close to the X1 side in the lateral direction X with respect to the FIX panel assembly 40 so as to be brought into a closed position (see FIGS. 1 and 2), an intermediate position (see FIG. 3), and an open position (see FIG. 4) by being driven by a drive unit (not shown).

As illustrated in FIG. 2, when the panorama window 1 is in the closed position, the parallelly movable panel assembly 20, the slidably movable panel assembly 30, and the FIX panel assembly 40 are arranged in a straight line in this order from the X1 side to the X2 side in the lateral direction X in the frame assembly 10.

When the panorama window 1 is in the closed position, the parallelly movable panel assembly 20 and the slidably movable panel assembly 30 are arranged such that depth-wise surfaces of reinforcing members 25 and 35 (to be described later) provided at outer end portions in the lateral direction X are opposed to each other in a joining portion 51. The slidably movable panel assembly 30 and the FIX panel assembly 40 are arranged such that depth-wise surfaces of reinforcing members 35 and 45 (to be described later) provided at outer end portions in the lateral direction X are opposed to each other in a joining portion 52.

The panorama window 1 can be transitioned from the closed position (see FIGS. 1 and 2) to the open position (see FIG. 4) in the following manner. The parallelly movable panel assembly 20 is moved toward the interior side Y2 in the depth-wise direction Y, whereby the panorama window 1 is transitioned from the closed position illustrated in FIG. 2 to the intermediate position illustrated in FIG. 3. Thereafter, the slidably movable panel assembly 30 is moved toward the X1 side in the lateral direction X corresponding to the widthwise direction, whereby panorama window 1 is transitioned from the intermediate position illustrated in FIG. 3 to the open position illustrated in FIG. 4.

The panorama window 1 can be transitioned from the open position (see FIG. 4) to the closed position (see FIGS. 1 and 2) in the following manner. The slidably movable panel assembly 30 is moved toward the X2 side in the lateral direction X corresponding to the widthwise direction, whereby the panorama window 1 is transitioned from the open position illustrated in FIG. 4 to the intermediate position illustrated in FIG. 3. Thereafter, the parallelly movable panel assembly 20 is moved toward the exterior side Y1 in the depth-wise direction Y, whereby the panorama window 1 can be transitioned from the intermediate position illustrated in FIG. 3 to the open position illustrated in FIG. 2.

Next, the configurations of the parallelly movable panel assembly 20, the slidably movable panel assembly 30, and the FIX panel assembly 40 will be described in detail. The parallelly movable panel assembly 20, the slidably movable panel assembly 30, and the FIX panel assembly 40 each constitute the multi-layered glass of the present disclosure.

As illustrated in FIGS. 2 to 4, each of the parallelly movable panel assembly 20, the slidably movable panel assembly 30, and the FIX panel assembly 40 is constituted by the multi-layered glass that includes three glass plates (an exterior-side glass plate 21, 31, 41, an intermediate glass plate 22, 32, 42, and an interior-side glass plate 23, 33, 43), spacers 24, 34, 44, a pair of reinforcing members 25, 35, 45, and an airtight member 28, 38, 48.

Each of the exterior-side glass plates 21, 31, 41, the intermediate glass plates 22, 32, 42, and the interior-side glass plates 23, 33, 43 has a rectangular shape. The exterior-side glass plates 21, 31, 41, the intermediate glass plates 22, 32, 42, and the interior-side glass plates 23, 33, 43 are arranged in the depth-wise direction Y in this order from the exterior side Y1 toward the interior side Y2 such that the exterior-side, intermediate, and interior-side glass plates are layered with an air space interposed between adjacent ones of the glass plates.

The spacers 24, 34, 44 are respectively disposed between the three glass plates (the exterior-side glass plate 21, 31, 41, the intermediate glass plate 22, 32, 42, and the interior-side glass plate 23, 33, 43) included in the parallelly movable panel assembly 20, the slidably movable panel assembly 30, and the FIX panel assembly 40, so that each spacer extends along a peripheral edge portion of the respective glass panel assembly including both end portions in the lateral direction X and upper and lower end portions. Due to this configuration, the exterior-side glass plates 21, 31, 41, the intermediate glass plates 22, 32, 42, and the interior-side glass plates 23, 33, 43 are spaced apart from each other via the spacers 24, 34, 44. The upper and lower end portions of the parallelly movable panel assembly 20, the slidably movable panel assembly 30, and the FIX panel assembly 40 are not illustrated in the drawings.

Each of the spacers 24, 34, 44 has a long shape and extends along the vertical sides of both end portions in the lateral direction X and the lateral sides of the upper and lower end portions of the corresponding one of the parallelly movable panel assembly 20, the slidably movable panel assembly 30, and the FIX panel assembly 40.

The exterior-side glass plates 21, 31, 41, the intermediate glass plates 22, 32, 42, and the interior-side glass plates 23, 33, 43 are not particularly limited, and may be made of a material such as float glass produced by a float method, tempered glass, or the like. Alternatively, each of them may be laminated glass, cathedral glass, wire glass, or the like. The number of glass plates included in the multi-layered glass (the parallelly movable panel assembly 20, the slidably movable panel assembly 30, the FIX panel assembly 40) of the present embodiment is three. However, this is a non-limiting example, and the number of glass plates have to be two or more.

As illustrated in FIGS. 2 to 4, the reinforcing members 25, 35, 45 are attached to both outer end portions in the lateral direction X of the respective exterior-side glass plate 21, 31, 41 and the respective interior-side glass plate 23, 33, 43 in the. As illustrated in FIGS. 2 to 4, the reinforcing members 25, 35, 45, which are disposed at both end portions in the lateral direction X of the respective exterior-side glass plate 21, 31, 41 and the respective interior-side glass plate 23, 33, 43, are positioned outward in the lateral direction X with respect to the spacers 24, 34, 44, respectively. In the present embodiment, although not shown, the reinforcing members are not provided at the upper and lower end portions of each of the exterior-side glass plates 21, 31, 41 and the interior-side glass plates 23, 33, 43.

As illustrated in FIG. 1, the pair of reinforcing members 25, the pair of reinforcing members 35, and the pair of reinforcing members 45 have a width and respectively extend in the vertical direction (top-to-bottom direction) along both lateral end portions of the parallelly movable panel assembly 20, the slidably movable panel assembly 30, and the FIX panel assembly 40.

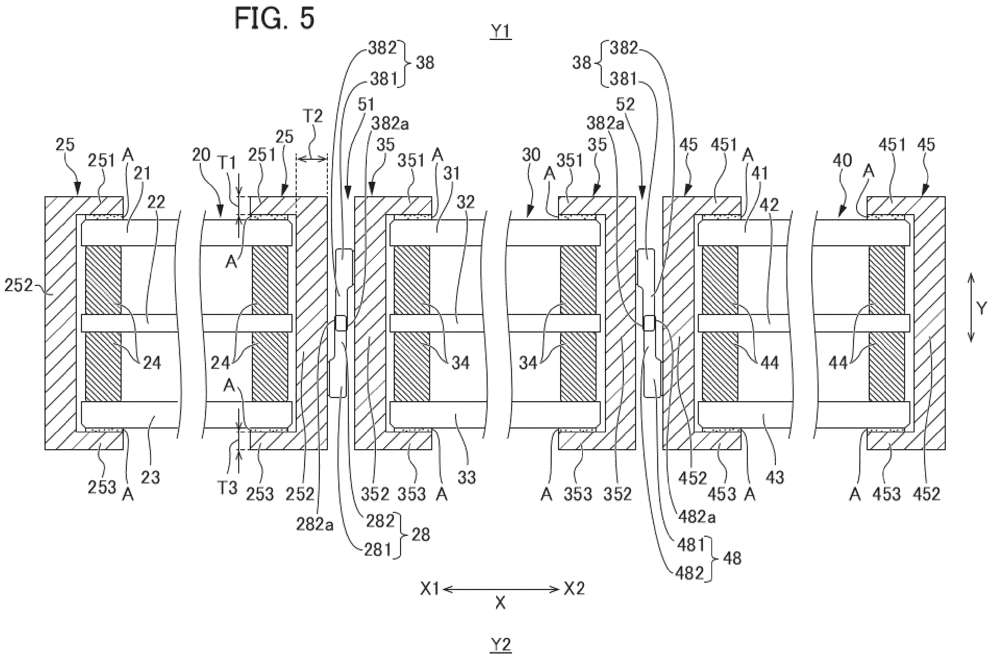

As illustrated in FIG. 5, in a cross section along the lateral direction X (left-right direction), the reinforcing members 25, 35, 45 each have a U-shape that opens toward inside in the lateral direction X. The reinforcing members 25, 35, 45 each include: an exterior-side widthwise surface reinforcing portion 251, 351, 451 (one-side widthwise surface reinforcing portion, widthwise surface reinforcing portion) that is disposed along an outer widthwise surface belonging to the corresponding one of the exterior-side glass plates 21, 31, 41 and facing the exterior side Y1; a depth-wise surface reinforcing portion 252, 352, 452 (depth-wise surface portion) that is disposed along each outer depth-wise surface belonging to the corresponding one of the parallelly movable panel assembly 20, the slidably movable panel assembly 30, and the FIX panel assembly 40 and facing in the lateral direction X; and an interior-side widthwise surface reinforcing portion 253, 353, 453 (other-side widthwise surface reinforcing portion, widthwise surface reinforcing portion) that is disposed along an outer widthwise surface belonging to the corresponding one of the interior-side glass plates 23, 33, 43 and facing the interior side Y2. The exterior-side widthwise surface reinforcing portion 251, 351, 451, the depth-wise surface reinforcing portion 252, 352, 452, and the interior-side widthwise surface reinforcing portion 253, 353, 453 are continuous with each other to thereby form the reinforcing member 25, 35, 45 having a U-shape in a cross-sectional view.

The exterior-side widthwise surface reinforcing portion 251, 351, 451 close to the exterior side Y1 is provided at each lateral end portion of the corresponding one of the parallelly movable panel assembly 20, the slidably movable panel assembly 30, and the FIX panel assembly 40, and extends, in a predetermined length in the lateral direction X, externally along the widthwise surface belonging to the corresponding one of the parallelly movable panel assembly 20, the slidably movable panel assembly 30, and the FIX panel assembly 40, and facing the exterior side Y1. The exterior-side widthwise surface reinforcing portion 251, 351, 451 is fixed, by means of an adhesive A, to the widthwise surface belonging to the corresponding one of the exterior-side glass plate 21, 31, 41 and facing the exterior side Y1 (outside). Since the adhesive A is covered with the exterior-side widthwise surface reinforcing portions 251, 351, 451 of the reinforcing members 25, 35, 45, the adhesive A can be protected from ultraviolet rays, and deterioration of the adhesive A can be reduced.

The depth-wise surface reinforcing portion 252, 352, 452 is continuous with an outer end portion in the lateral direction X of the corresponding one of the exterior-side widthwise surface reinforcing portions 251, 351, 451. The depth-wise surface reinforcing portion 252, 352, and 452 is disposed externally with respect to the lateral direction X along the depth-wise surface belonging to the corresponding one of the parallelly movable panel assembly 20, the slidably movable panel assembly 30, and the FIX panel assembly 40, and extends in the depth-wise direction Y from the outer end portion in the lateral direction X of the corresponding one of the exterior-side widthwise surface reinforcing portions 251, 351, 451 by a length in the depth-wise direction Y of the corresponding one of the parallelly movable panel assembly 20, the slidably movable panel assembly 30, and the FIX panel assembly 40.

The interior-side widthwise surface reinforcing portion 253, 353, 453 close to the interior side Y2 is continuous with an end portion belonging to the corresponding one of the depth-wise surface reinforcing portions 252, 352, 452 and located close to the interior side Y2. The interior-side widthwise surface reinforcing portion 253, 353, 453 close to the interior side Y2 is provided at each lateral end portion of the corresponding one of the parallelly movable panel assembly 20, the slidably movable panel assembly 30, and the FIX panel assembly 40, and extends externally along a widthwise surface facing the interior side Y2, in a predetermined length in the lateral direction X from the end of the corresponding one of the depth-wise surface reinforcing portions 252, 352, 452 close to the interior side Y2 toward the inside in the lateral direction X. The interior-side widthwise surface reinforcing portion 253, 353, 453 is fixed, by means of an adhesive A, to the widthwise surface belonging to the corresponding one of the interior-side glass plate 23, 33, 43 and facing the interior side Y2 (outside). Since the adhesive A is covered with the interior-side widthwise surface reinforcing portions 253, 353, 453 of the reinforcing members 25, 35, 45, the adhesive A can be protected from ultraviolet rays, and deterioration of the adhesive A can be reduced.

As illustrated in FIG. 5, in each of the reinforcing members 25, 35, 45, the thickness T2 in the lateral direction X of the depth-wise surface reinforcing portion 252, 352, 452 is greater than the thickness T1 in the depth-wise direction Y of the exterior-side widthwise surface reinforcing portion 251, 351, 451 disposed on the widthwise surface facing the exterior side Y1, and the thickness T3 in the depth-wise direction Y of the interior-side widthwise surface reinforcing portion 253, 353, 453 disposed on the widthwise surface facing the interior side Y2.

The reinforcing members 25, 35, 45 suppress flexure of the parallelly movable panel assembly 20, the slidable movable panel assembly 30, and the FIX panel assembly 40, and ensure a strength of the panel assemblies. The reinforcing members 25, 35, 45 are constituted by carbon fiber-reinforced plastic (CFRP). This makes it possible to impart to the multi-layered glass (the parallelly movable panel assembly 20, the slidably movable panel assembly 30, the FIX panel assembly 40) a strength that allowing for construction of a fitting without a stile, and to ensure heat insulating properties. The carbon fiber-reinforced plastic constituting the reinforcing members 25, 35, 45 contains a bundle of plurality of fibers extending in a direction intersecting with the width direction of the reinforcing members 25, 35, 45 and a resin fixing the bundle. The carbon fiber-reinforced plastic is formed by impregnating the bundle of the plurality of fibers extending in a direction intersecting with the width direction of the reinforcing members 25, 35, 45 with a resin such as a thermosetting resin or a thermoplastic resin, and curing the resin. The direction in which the plurality of fibers forming part of the carbon fiber-reinforced plastic extend does not have to be coincide with the longitudinal direction of the reinforcing members 25, 35, 45. The plurality of fibers forming part of the carbon fiber-reinforced plastic do not have to extend through the reinforcing members 25, 35, 45 from one end to the other in the longitudinal direction.

The carbon fiber-reinforced plastic constituting the reinforcing members 25, 35, 45 has a higher elastic strength than a glass plate. As used herein, the elastic strength refers to Young's modulus, and the Young's modulus of a glass plate is about 71,600 MPa. The Young's modulus can be measured in accordance with JIS K 7164 (isotropic and orthotropic fiber-reinforced plastics) or JIS K 7165 (unidirectional fiber-reinforced plastic composites), on the basis of the general rule defined in JIS K 7161.

Thus, the multi-layered glass constituting each of the parallelly movable panel assembly 20, the slidably movable panel assembly 30, and the FIX panel assembly 40 has a monocoque structure in which the plurality of glass plates and the reinforcing members 25, 35, 45 are integrated, thereby making it possible to achieve a strength higher than a strength obtained by simply adding the strengths of the respective components. In other words, using the reinforcing members 25, 35, 45 constituted by the carbon fiber-reinforced plastic while omitting stiles (not shown), which are usually disposed at the ends of a glass plate to maintain a strength, makes it possible to ensure a high strength even without the stiles and reduce the thickness in the depth-wise direction Y.

As illustrated in FIG. 5, the reinforcing members 25, 35, 45 are attached to both end portions in the lateral direction X of the corresponding one of the parallelly movable panel assembly 20, the slidably movable panel assembly 30, and the FIX panel assembly 40, which include the spacers 24, 34, 44 between adjacent ones of the three glass plates (the exterior-side glass plates 21, 31, 41, the intermediate glass plate 22, 32, 42, and the interior-side glass plate 23, 33, 43), respectively in the parallelly movable panel assembly 20, the slidably movable panel assembly 30, and the FIX panel assembly 40.

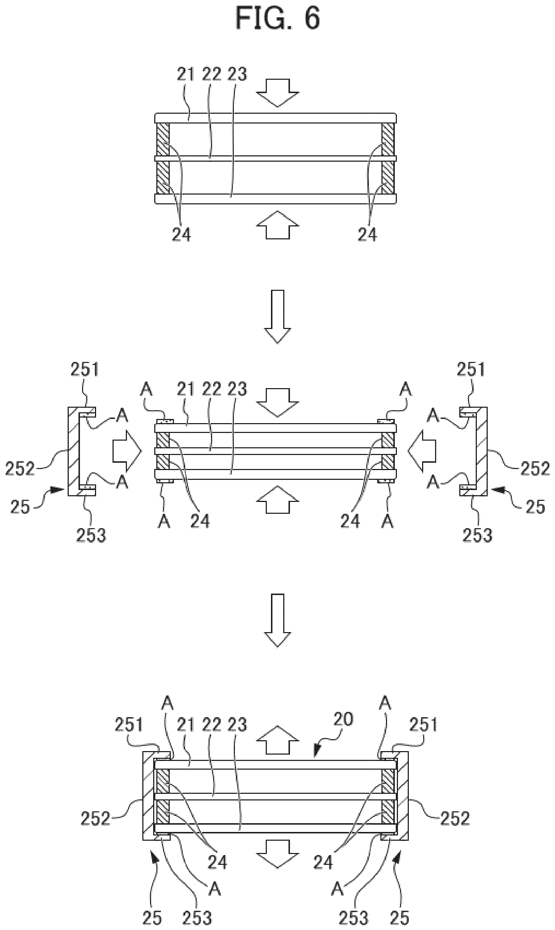

In the present embodiment, the spacers 24, 34, 44 are elastic bodies. Constituting the spacers 24, 34, and 44 by elastic bodies facilitates installation of the reinforcing members 25, 35, 45 on the parallelly movable panel assembly 20, the slidably movable panel assembly 30, and the FIX panel assembly 40. For example, in the case of the parallelly movable panel assembly 20 illustrated in FIG. 6, the parallelly movable panel assembly 20 having the spacers 24 interposed between three glass plates (the exterior-side glass plate 21, the intermediate glass plate 22, and the interior-side glass plate 23) is compressed in the depth-wise direction (see the upper diagram and the middle diagram of FIG. 6). In this state, the reinforcing members 25 can be attached in the widthwise direction (see the middle diagram and the lower diagram in FIG. 6). Thus, the attaching process is facilitated in manufacture. In particular, the reinforcing members 25, 35, 45 described in the present embodiment, which have a U-shape in a cross-sectional view, exert a considerable effect on manufacture. Examples of the elastic body include a styrene-based thermoplastic elastomer, a resin obtained by adding a desiccant to butyl, a resin obtained by adding a desiccant to beads of EPDM silicone, etc.

As illustrated in FIG. 2, when the panorama window 1 is in the closed position, the widthwise surface that belongs to the reinforcing member 25 on the X1-side end portion of the parallelly movable panel assembly 20 and that faces the exterior side Y1 is in contact with a contact member 13a disposed on a surface that belongs to an exterior-side portion of the vertical frame 13 close to the exterior side Y1 and that faces the interior side Y2. The contact member 13a is made of a soft resin.

The widthwise surface that belongs to the reinforcing member 45 on the X2-side end portion of the FIX panel assembly 40 and that faces the exterior side Y1 is in contact with a contact member 14a disposed on a surface that belongs to an exterior-side portion of the vertical frame 14 close to the exterior side Y1 and that faces the interior side Y2. The widthwise surface that belongs to the reinforcing member 45 on the X2-side end portion of the FIX panel assembly 40 and that faces the interior side Y2 is in contact with a contact member 14b disposed on a surface that belongs to an interior-side portion of the vertical frame 14 close to the interior side Y2 and that faces the exterior side Y1. The contact members 14a and 14b are formed of a soft resin, and can follow deformation of the FIX panel assembly 40 and play a cushioning role when in contact with the widthwise surfaces of the reinforcing member 45 disposed on the X2-side end portion of the FIX panel assembly 40, which face the exterior side Y1 and the interior side Y2, respectively.

As illustrated in FIG. 2, a sheet-shaped airtight member 5 is disposed in a pocket portion of each of the pair of vertical frames 13 and 14. Here, the structure around the sheet-shaped airtight member 5 will be described. The structure around the sheet-shaped airtight member 5 in the vertical frame 13 and that in the vertical frame 14 are bilaterally symmetrical. Therefore, in the present embodiment, the structure around the sheet-shaped airtight member 5 in the vertical frame 14 close to the X2 side will be described.

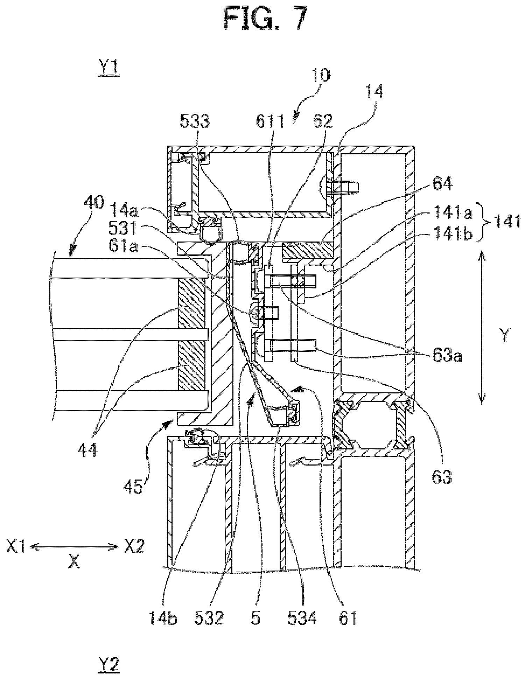

As illustrated in FIG. 7, the sheet-shaped airtight member 5 extends in the depth-wise direction Y, and includes a straight portion 531 that extends in the depth-wise direction Y and is positioned close to the exterior side Y1, an inclined portion 532 that is connected to an end of the straight portion 531 close to the interior side Y2 and extends inclinedly with respect to the depth-wise direction Y toward the interior side Y2, an exterior end protruding portion 533 that is formed on an outer peripheral side of an end close to the exterior side Y1, and an interior end protruding portion 534 that is formed on an outer peripheral side of an end close to the interior side Y2.

The sheet-shaped airtight member 5 is made of a soft resin, and is capable of enhancing airtightness between the reinforcing member 45 and the vertical frame 14 by being in contact with the reinforcing member 45, as illustrated in FIG. 7. The exterior end protruding portion 533 and the interior end protruding portion 534 of the sheet-shaped airtight member 5 are fixed to both depth-wise ends of a plate-shaped member 61 made of an aluminum material and having a large length. The plate-shaped member 61 is located on the outer peripheral side of the sheet-shaped airtight member 5 and is attached to a sheet-fixed member 62 with a fastening member such as a screw 61a. A counter member 63 is provided further outward of the outer peripheral side of the sheet-fixed member 62, and the sheet-fixed member 62 and the counter member 63 are fastened to each other with screws 63a. The tension of the sheet-shaped airtight member 5 can be adjusted by tightening or loosening the screws 63a.

The plate-shaped member 61 has, at its end close to the exterior side Y1 in the depth-wise direction, a bent portion 611 that is bent toward the outer peripheral side, and a resin member 64 is disposed on an end portion of the bent portion 611 close to the outer peripheral side. The resin member 64 is in contact with a protrusion 141 protruding toward an inner peripheral side in the pocket portion of the vertical frame 14. The protrusion 141 includes a protruding portion 141a protruding toward the X1 side in the lateral direction X in the pocket portion of the vertical frame 14 from the surface facing the X1 side, and an extension portion 141b extending toward the interior side Y2 from an intermediate portion in the lateral direction X of the protruding portion 141a. The extension portion 141b is fastened to a portion of the counter member 63 close to the exterior side Y1 with the screw 63a.

By using the sheet-shaped airtight member 5 as described above, even when the FIX panel assembly 40 is warped in the height direction or the width direction (depth-wise direction Y) due to wind pressure or the like, the contact area between the sheet-shaped airtight member 5 and the reinforcing member 45 can be ensured, thereby allowing airtightness to be maintained. This effect is particularly noticeable in a case where the FIX panel assembly 40 of a large size is used because the warpage of the FIX panel assembly 40 also increases in such a case.

Referring to FIG. 5, the airtight members 28, 38, 48 are each attached to the end portion that belongs to the corresponding one of the parallelly movable panel assembly 20, the slidably movable panel assembly 30, and the FIX panel assembly 40 and that faces the joining portion 51, 52. The airtight members 28, 38, 48 each have a substantially L-shape, and each protrude outward from the end portion in the lateral direction X of the corresponding one of the parallelly movable panel assembly 20, the slidably movable panel assembly 30, and the FIX panel assembly 40. In the present embodiment, the airtight member 28 for the parallelly movable panel assembly 20 is attached to the outer depth-wise surface of the end portion of the parallelly movable panel assembly 20 facing the X2 side in the lateral direction X. The airtight members 38 for the slidably movable panel assembly 30 are attached to the outer depth-wise surfaces of both end portions in the lateral direction X (the end portions close to the X1 side and the X2 side, respectively) of the slidably movable panel assembly 30. The airtight member 48 for the FIX panel assembly 40 is attached to the outer depth-wise surface of the end portion of the FIX panel assembly 40 facing the X1 side in the lateral direction X.

The airtight members 28, 38, 48 each include a base portion 281, 381, 481 connected to the outer depth-wise surface belonging to the corresponding one of the reinforcing members 25, 35, 45 and facing outside in the lateral direction X, and an extension portion 282, 382, 482 extending from a part of the base portion 281, 381, 481 opposite to the corresponding one of the reinforcing members 25, 35, 45 toward the exterior side Y1 or the interior side Y2.

In the present embodiment, the airtight member 28, which is provided to the end portion belonging to the parallelly movable panel assembly 20 and located close to the joining portion 51, has the base portion 281 attached to the depth-wise surface of the depth-wise surface reinforcing portion 252 of the reinforcing member 25 at a position closer to the interior side Y2, and the extension portion 282 extending toward the exterior side Y1 from a part of the base portion 281 opposite to the reinforcing member 25.

The pair of airtight members 38, which are respectively provided to the end portions belonging to the slidably movable panel assembly 30 and located close to the joining portions 51, 52, each have the base portion 381 attached to the depth-wise surface of the depth-wise surface reinforcing portion 352 of the respective reinforcing member 35 at a position closer to the exterior side Y1, and the extension portion 382 extending toward the interior side Y2 from a part of the base portion 381 opposite to the reinforcing member 35.

The airtight member 48, which is provided to the end portion belonging to the FIX panel assembly 40 and located close to the joining portion 52, has the base portion 481 attached to the depth-wise surface of the depth-wise surface reinforcing portion 452 of the reinforcing member 45 at a position closer to the interior side Y2, and the extension portion 482 extending toward the exterior side Y1 from a part of the base portion 481 opposite to the reinforcing member 45.

In a case where the parallelly movable panel assembly 20 has been brought into the state illustrated in FIG. 2 from the state illustrated in FIG. 3 by being moved in the direction from the interior side Y2 toward the exterior side Y1, in the joining portion 51 between the parallelly movable panel assembly 20 and the slidably movable panel assembly 30, the airtight members 28 and 38 are in contact with each other in a state where a leading end 282a of the extension portion 282 of the airtight member 28 attached to the parallelly movable panel assembly 20 is pressed against a leading end 382a of the extension portion 382 of the airtight member 38 attached to the slidably movable panel assembly 30, as illustrated in FIG. 2. Accordingly, in the closed position illustrated in FIG. 2, the airtightness can be ensured between the parallelly movable panel assembly 20 and the slidably movable panel assembly 30.

In a case where the slidably movable panel assembly 30 has been brought into the state illustrated in FIG. 3 from the state illustrated in FIG. 4 by being moved in the lateral direction X from X1 side toward the X2 side, in the joining portion 52 between the slidably movable panel assembly 30 and the FIX panel assembly 40, the airtight members 38 and 48 are in contact with each other in a state where a leading end 382a of the extension portion 382 of the airtight member 38 attached to the slidably movable panel assembly 30 is pressed against a leading end 482a of the extension portion 482 of the airtight member 48 attached to the FIX panel assembly 40, as illustrated in FIG. 3. Accordingly, in the positions illustrated in FIGS. 2 and 3, the airtightness can be ensured between the slidably movable panel assembly 30 and the FIX panel assembly 40.

By forming the airtight members 28, 38, 48 into a substantially L-shape, even though the slidably movable panel assembly 30 and the FIX panel assembly 40 move in different directions, i.e., the lateral direction X and the depth-wise direction Y, the leading ends of the extension portions 282, 382, 482 of the airtight members 28, 38, 48 are pressed against each other in the joining portions 51 and 52, whereby the airtightness can be ensured. Although the slidably movable panel assembly 30 and the FIX panel assembly 40 move in different directions, the airtight members 28, 38, 48 having the same configuration can be used, which contributes to reduction of the manufacturing costs.

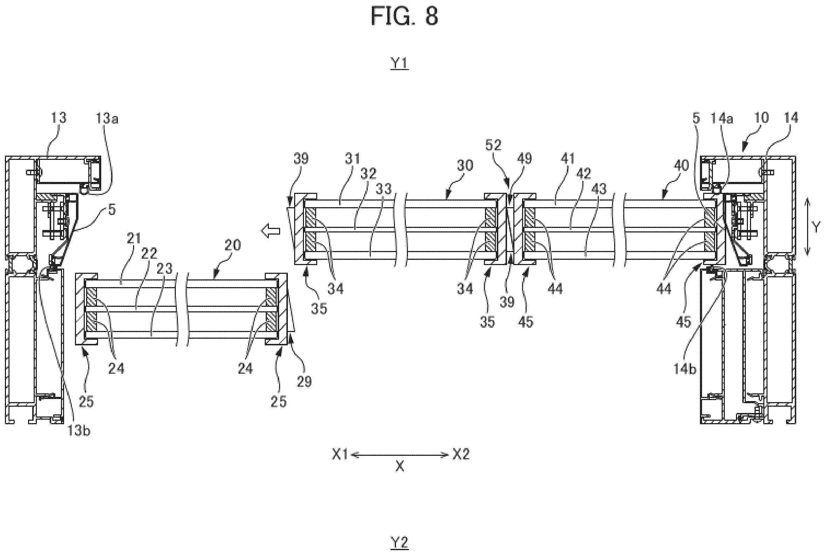

In the present embodiment, the airtight members 28, 38, 48 have a substantially L-shape, but this is a non-limiting example. For example, as in a modification illustrated in FIG. 8, airtight members 29, 39, 49 may be formed into a substantially right-angled triangular shape so that the inclined portions of the airtight members 29, 39, 49 are in contact with each other in the joining portions 51 and 52.

The present embodiment described above exerts the following effects. Each of the parallelly movable panel assembly 20, the slidably movable panel assembly 30, and the FIX panel assembly 40 includes the reinforcing members 25, 35, 45 constituted by carbon fiber-reinforced plastic and disposed at the end portions in the lateral direction X (widthwise direction), and each of the reinforcing members 25, 35, 45 includes the depth-wise surface reinforcing portion 252, 352, 452, the exterior-side widthwise surface reinforcing portion 251, 351, 451, and the interior-side widthwise surface reinforcing portion 253, 353, 453 that are continuous with each other.

Due to this configuration, in which the exterior-side widthwise surface reinforcing portion 251, 351, 451 and the interior-side widthwise surface reinforcing portion 253, 353, 453 are respectively disposed on outer locations in the depth-wise direction Y of the corresponding one of the parallelly movable panel assembly 20, the slidably movable panel assembly 30, and the FIX panel assembly 40, the depth-wise surface reinforcing portion 252, 352, 452 has a greater length in the depth-wise direction Y in comparison with a case where the exterior-side widthwise surface reinforcing portion and the interior-side widthwise surface reinforcing portion are respectively disposed on and fixed to the inner widthwise surfaces of the outermost glass plates. Furthermore, the widthwise and depth-wise surfaces of each end portion in the lateral direction X of each of the parallelly movable panel assembly 20, the slidably movable panel assembly 30, and the FIX panel assembly 40 (the multi-layered glass) can be covered over a wide continuous range. As a result, the strength of the parallelly movable panel assembly 20, the slidably movable panel assembly 30, and the FIX panel assembly 40 (the multi-layered glass) can be increased.

The reinforcing members 25, 35, 45 are constituted by carbon fiber-reinforced plastic. This makes it possible to impart to the multi-layered glass (the parallelly movable panel assembly 20, the slidably movable panel assembly 30, the FIX panel assembly 40) a strength that allowing for construction of a fitting without a stile, and to ensure heat insulating properties. In addition, since the adhesive A is covered with the exterior-side widthwise surface reinforcing portions 251, 351, 451 of the reinforcing members 25, 35, 45, the adhesive A can be protected from ultraviolet rays, and deterioration of the adhesive A can be reduced. Since the adhesive A is covered with the interior-side widthwise surface reinforcing portions 253, 353, 453 of the reinforcing members 25, 35, 45, the adhesive A can be protected from ultraviolet rays, and deterioration of the adhesive A can be reduced.

According to the present embodiment, the exterior-side widthwise surface reinforcing portion 251, 351, 451, a depth-wise surface reinforcing portion 252, 352, 452, and an interior-side widthwise surface reinforcing portion 253, 353, 453 are continuous with each other to thereby form the reinforcing members 25, 35, 45 having a U-shape in a cross-sectional view. With this configuration, in which the end portions in the lateral direction X of the parallelly movable panel assembly 20, the slidably movable panel assembly 30, and the FIX panel assembly 40 (the multi-layered glass), the outer widthwise surface facing the exterior side Y1, the depth-wise surface, and the outer widthwise surface facing the interior side Y2 can be covered over a wide and continuous U-shaped range, thereby making it possible to further increase the strength of each of the parallelly movable panel assembly 20, the slidably movable panel assembly 30, and the FIX panel assembly 40 (the multi-layered glass).

In the present embodiment, the carbon fiber-reinforced plastic constituting the reinforcing members 25, 35, 45 contains a bundle of plurality of fibers extending in a direction intersecting with the width direction of the reinforcing members 25, 35, 45 and a resin fixing the bundle. This feature, in which the carbon fiber-reinforced plastic contains a bundle of fibers extending in a direction intersecting with the width direction of the reinforcing members 25, 35, 45, can reduce the likelihood of breakage of the reinforcing members 25, 35, 45 at an intermediate portion in the longitudinal direction and can enhance strength against bending in the longitudinal direction, in comparison with a case of using carbon fiber-reinforced plastic containing a plurality of individual pieces of fibers solidified with a resin.

According to the present embodiment, the thickness T2 of the depth-wise surface reinforcing portion 252, 352, 452 is greater than the thickness T1 and T3 of the widthwise surface reinforcing portions (the exterior-side widthwise surface reinforcing portion 251, 351, 451, the interior-side widthwise surface reinforcing portion 253, 353, 453). Due to this feature, the joining portions 51, 52 between the parallelly movable panel assembly 20, the slidably movable panel assembly 30, and the FIX panel assembly 40 can have a high strength that withstands impact caused at the time of opening and closing the parallelly movable panel assembly 20, the slidably movable panel assembly 30, and the FIX panel assembly 40.

In the present embodiment, the depth-wise surface reinforcing portion 252, 352, 452 has the airtight member 28, 38, 48 that is attached to its outer depth-wise surface facing outside in the lateral direction X. This feature makes it possible to achieve airtightness between the parallelly movable panel assembly 20, the slidably movable panel assembly 30, and the FIX panel assembly 40, thereby making it possible to improve airtight properties.

In the present embodiment, although not shown, the upper end portion and the lower end portion of each of the parallelly movable panel assembly 20, the slidably movable panel assembly 30, and the FIX panel assembly 40 (multi-layered glass) are provided with only the spacers, without a reinforcing member. The strength of the parallelly movable panel assembly 20, the slidably movable panel assembly 30, and the FIX panel assembly 40 (multi-layered glass) can be ensured by providing the pair of vertically-extending reinforcing members 25, the pair of vertically-extending reinforcing members 35, and the pair of vertically-extending reinforcing members 45 at the outer end portions in the lateral direction X, even without disposing reinforcing members at the upper end portion and the lower end portion of each of the parallelly movable panel assembly 20, the slidably movable panel assembly 30, and the FIX panel assembly 40 (multi-layered glass).

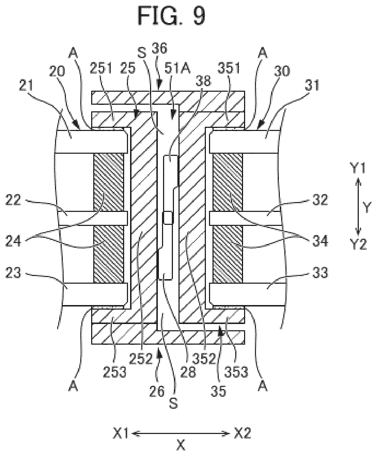

Next, a second embodiment of the present disclosure will be described with reference to FIG. 9. In the second embodiment, a configuration of end portions belonging to the parallelly movable panel assembly 20 (multi-layered glass) and the slidably movable panel assembly 30 (multi-layered glass) and located close to a joining portion 51A will be described. Since end portions belonging to the slidably movable panel assembly 30 and the FIX panel assembly 40 and located close to a joining portion 52 have a similar configuration, a description thereof will be omitted herein.

The second embodiment is mainly different from the first embodiment in that the second embodiment includes decorative materials 26, 36 attached to reinforcing members 25, 35, in addition to the components of the first embodiment. In the description of the second embodiment, the same components as those of the first embodiment are denoted by the same reference signs in the drawing, and the description thereof is omitted.

As illustrated in FIG. 9, each of the reinforcing members 25, 35 of the second embodiment has, on one widthwise surface of a pair of widthwise surfaces facing outside in the depth-wise direction Y (the exterior side Y1 and the interior side Y2), the corresponding one of the decorative materials 26, 36 attached. The decorative materials 26, 36 are respectively connected to the outer widthwise surfaces belonging to the reinforcing members 25 and 35 and facing outside in the depth-wise direction Y, and extend outward in the lateral direction X so as to cover the joining portion 51A between the parallelly movable panel assembly 20 and the slidably movable panel assembly 30.

In the present embodiment, the decorative material 26 is attached to the end portion of the parallelly movable panel assembly 20 close to the joining portion 51A by being connected to the widthwise surface that belongs to the interior-side widthwise surface reinforcing portion 253 of the reinforcing member 25 attached to the parallelly movable panel assembly 20 and that faces the interior side Y2 (outside) in the depth-wise direction Y. The decorative material 26 extends toward the X2 side (outside) in the lateral direction X from the widthwise surface belonging to the interior-side widthwise surface reinforcing portion 253 and facing the interior side Y2. The decorative material 26 extends toward the slidably movable panel assembly 30 in the lateral direction X in parallel to the widthwise surface that belongs to the interior-side widthwise surface reinforcing portion 353 of the reinforcing member 35 attached to the slidably movable panel assembly 30 and that faces the interior side Y2, at a position separate toward the interior side Y2 from the widthwise surface that belongs to the interior-side widthwise surface reinforcing portion 353 and that faces the interior side Y2.

The decorative material 26 extends in the lateral direction X while covering, from the interior side Y2, not only a gap S in the joining portion 51A between the parallelly movable panel assembly 20 and the slidably movable panel assembly 30 and the airtight members 28, 38 disposed in the joining portion 51A, but also the interior-side widthwise surface reinforcing portion 353 attached to the slidably movable panel assembly 30. This configuration makes it possible to improve the design properties of the joining portion 51A between the parallelly movable panel assembly 20 and the slidably movable panel assembly 30.

The decorative material 36 is attached to the end portion of the slidably movable panel assembly 30 close to the joining portion 51A by being connected to the widthwise surface that belongs to the exterior-side widthwise surface reinforcing portion 351 of the reinforcing member 35 attached to the slidably movable panel assembly 30 and that faces the exterior side Y1 (outside) in the depth-wise direction Y. The decorative material 36 extends toward the X1 side (outside) in the lateral direction X from the widthwise surface belonging to the exterior-side widthwise surface reinforcing portion 351 and facing the exterior side Y1. The decorative material 36 extends toward the parallelly movable panel assembly 20 in the lateral direction X in parallel to the widthwise surface that belongs to the exterior-side widthwise surface reinforcing portion 251 of the reinforcing member 25 attached to the parallelly movable panel assembly 20 and that faces the exterior side Y1, at a position separated toward the exterior side Y1 from the widthwise surface that belongs to the exterior-side widthwise surface reinforcing portion 251 of the reinforcing member 25 and that faces the exterior side Y1.

The decorative material 36 extends in the lateral direction X while covering, from the exterior side Y1, not only a gap S in the joining portion 51A between the parallelly movable panel assembly 20 and the slidably movable panel assembly 30 and the airtight members 28 and 38 disposed in the joining portion 51A, but also the exterior-side widthwise surface reinforcing portion 251 attached to the parallelly movable panel assembly 20. This configuration makes it possible to improve the design properties of the joining portion 51A between the parallelly movable panel assembly 20 and the slidably movable panel assembly 30.

The decorative materials 26, 36 may be constituted by the same material as that of the reinforcing members 25, 35, or a material different from that of the reinforcing members 25, 35. In the present embodiment, the decorative materials 26, 36 are constituted by, for example, the same carbon fiber-reinforced plastic as that constituting the reinforcing members 25, 35. The decorative materials 26, 36 may be constituted by, for example, an aluminum material or a resin material.

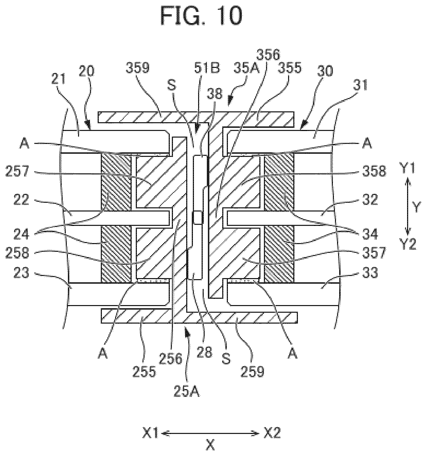

Next, a third embodiment of the present disclosure will be described with reference to FIG. 10. In the third embodiment, a configuration of end portions belonging to the parallelly movable panel assembly 20 (multi-layered glass) and the slidably movable panel assembly 30 (multi-layered glass) and located close to a joining portion 51B will be described. Since end portions belonging to the slidably movable panel assembly 30 and the FIX panel assembly 40 are located close to a joining portion 52 have a similar configuration, a description thereof will be omitted herein.

The third embodiment is mainly different from the first embodiment in that spacers 24, 34 of the third embodiment are disposed at different positions from the first embodiment, and that reinforcing members 25A, 35A of the third embodiment have a different configuration from the first embodiment. In the description of the third embodiment, the same components as those of the first embodiment are denoted by the same reference signs in the drawing, and the description thereof is omitted.

As illustrated in FIG. 10, in the third embodiment, the spacers 24, 34 disposed between the three glass plates (the exterior-side glass plate 21, 31, 41, the intermediate glass plate 22, 32, 42, the interior-side glass plate 23, 33, 43) are positioned inside in the lateral direction X in comparison with the first embodiment.

In the third embodiment, the parallelly movable panel assembly 20 and the slidably movable panel assembly 30 respectively have the reinforcing members 25A, 35A at the outer end portions in the lateral direction X, close to the joining portion 51B. As in the first embodiment, each of the reinforcing members 25A, 35A extends in the vertical direction (top-to-bottom direction) along the end portion that belongs to the corresponding one of the parallelly movable panel assembly 20 and the slidably movable panel assembly 30 and that is close to the joining portion 51B. The reinforcing members 25A, 35A are constituted by the carbon fiber-reinforced plastic (CFRP), as in the first embodiment.

The reinforcing member 25A attached to the parallelly movable panel assembly 20 includes: an interior-side widthwise surface reinforcing portion 255 (widthwise surface reinforcing portion) disposed along the widthwise surface that belongs to the interior-side glass plate 23 and faces the interior side Y2 (outside); a depth-wise surface reinforcing portion 256 (depth-wise surface portion) disposed along the depth-wise surface of the parallelly movable panel assembly 20; two protruding portions 257, 258 protruding, in a rectangular shape, from the depth-wise surface reinforcing portion 256 toward the inside of the parallelly movable panel assembly 20 in the lateral direction X (toward the X1 side in the lateral direction X); and a decorative portion 259 extending toward the X2 side from an end portion that belongs to the interior-side widthwise surface reinforcing portion 255 and that is close to the X2 side in the lateral direction X.

The interior-side widthwise surface reinforcing portion 255 and the depth-wise surface reinforcing portion 256 of the reinforcing member 25A are continuous with each other and formed into an L-shape in a cross-sectional view. Due to this configuration, in which the interior-side widthwise surface reinforcing portion 255 is disposed along the outer widthwise surface that belongs to the parallelly movable panel assembly 20 and faces outside in the depth-wise direction Y, the depth-wise surface reinforcing portion 256 has a greater length in the depth-wise direction Y in comparison with a case where the interior-side widthwise surface reinforcing portion 255 is disposed on and fixed to the inner widthwise surface of the outermost glass plate in the depth-wise direction. Thus, the end portion in the lateral direction X of the parallelly movable panel assembly 20 can be covered, over a further long L-shaped range, by the interior-side widthwise surface reinforcing portion 255 and the depth-wise surface reinforcing portion 256 of the reinforcing member 25A, thereby making it possible to increase the strength of the parallelly movable panel assembly 20 (multi-layered glass).

The protruding portion 257 protrudes in a rectangular shape toward the inside of the parallelly movable panel assembly 20 in the lateral direction X (toward the X1 side in the lateral direction X) from a part of an inner surface of the depth-wise surface reinforcing portion 256 close to the exterior side Y1, and is disposed between the exterior-side glass plate 21 and the intermediate glass plate 22. The widthwise surface belonging to the protruding portion 257 and facing the exterior side Y1 is fixed to the widthwise surface belonging to the exterior-side glass plate 21 and facing the interior side Y2 (inside) with an adhesive A.

The protruding portion 258 protrudes in a rectangular shape toward the inside of the parallelly movable panel assembly 20 in the lateral direction X (toward the X1 side in the lateral direction X) from a part of the inner surface of the depth-wise surface reinforcing portion 256 close to the interior side Y2, and is disposed between the intermediate glass plate 22 and the interior-side glass plate 23. The widthwise surface belonging to the protruding portion 258 and facing the interior side Y2 is fixed to the widthwise surface belonging to the interior-side glass plate 23 and facing the exterior side Y1 (inside) with an adhesive A.

The decorative portion 259 extends toward the X2 side in the lateral direction X from the X2-side end portion of the interior-side widthwise surface reinforcing portion 255 while covering, from the interior side Y2, a gap S in the joining portion 51B between the parallelly movable panel assembly 20 and the slidably movable panel assembly 30 and airtight members 28, 38 disposed in the joining portion 51B. This configuration makes it possible to improve the design properties of the joining portion 51B between the parallelly movable panel assembly 20 and the slidably movable panel assembly 30.

The reinforcing member 35A attached to the slidably movable panel assembly 30 includes: an exterior-side widthwise surface reinforcing portion 355 (widthwise surface reinforcing portion) disposed along the widthwise surface that belongs to the exterior-side glass plate 31 and faces the exterior side Y1 (outside); a depth-wise surface reinforcing portion 356 (depth-wise surface portion) disposed along the depth-wise surface of the slidably movable panel assembly 30; two protruding portions 357, 358 protruding, in a rectangular shape, from the depth-wise surface reinforcing portion 356 toward the inside of the slidably movable panel assembly 30 in the lateral direction X (toward the X2 side in the lateral direction X); and a decorative portion 359 extending toward the X1 side from the end portion that belongs to the exterior-side widthwise surface reinforcing portion 355 and that is close to the X1 side in the lateral direction X.

The exterior-side widthwise surface reinforcing portion 355 and the depth-wise surface reinforcing portion 356 of the reinforcing member 35A are continuous with each other and formed into an L-shape in a cross-sectional view. Due to this configuration, in which the exterior-side widthwise surface reinforcing portion 355 is disposed along the outer widthwise surface that belongs to the slidably movable panel assembly 30 and faces outside in the depth-wise direction Y, the depth-wise surface reinforcing portion 356 has a greater length in the depth-wise direction Y in comparison with a case where the exterior-side widthwise surface reinforcing portion 355 is disposed on and fixed to the inner widthwise surface of the outermost glass plate in the depth-wise direction. Thus, the end portion in the lateral direction X of the slidably movable panel assembly 30 can be covered, over a further long L-shaped range, by the exterior-side widthwise surface reinforcing portion 355 and the depth-wise surface reinforcing portion 356 of the reinforcing member 35A, thereby making it possible to increase the strength of the slidably movable panel assembly 30 (multi-layered glass).

The protruding portion 357 protrudes in a rectangular shape toward the inside of the slidably movable panel assembly 30 in the lateral direction X (toward the X2 side in the lateral direction X) from a part of an inner surface of the depth-wise surface reinforcing portion 356 close to the interior side Y2, and is disposed between the interior-side glass plate 33 and the intermediate glass plate 32. The widthwise surface belonging to the protruding portion 357 and facing the interior side Y2 is fixed to the widthwise surface belonging to the interior-side glass plate 33 and facing the exterior side Y1 (inside) with an adhesive A.

The protruding portion 358 protrudes in a rectangular shape toward the inside of the slidably movable panel assembly 30 in the lateral direction X (toward the X2 side in the lateral direction X) from a part of the inner surface of the depth-wise surface reinforcing portion 356 close to the exterior side Y1, and is disposed between the intermediate glass plate 32 and the exterior-side glass plate 31. The widthwise surface belonging to the protruding portion 358 and facing the exterior side Y1 is fixed to the widthwise surface belonging to the exterior-side glass plate 31 and facing the interior side Y2 (inside) with an adhesive A.

The decorative portion 359 extends toward the X1 side in the lateral direction X from the X1-side end portion of the exterior-side widthwise surface reinforcing portion 355 while covering, from the exterior side Y1, a gap S in the joining portion 51B between the parallelly movable panel assembly 20 and the slidably movable panel assembly 30 and the airtight members 28, 38 disposed in the joining portion 51B. This configuration makes it possible to improve the design properties of the joining portion 51B between the parallelly movable panel assembly 20 and the slidably movable panel assembly 30.

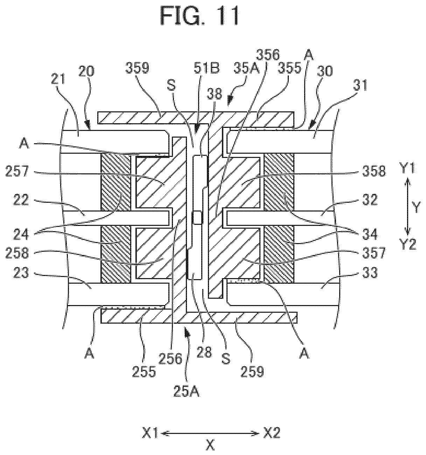

Next, a fourth embodiment of the present disclosure will be described with reference to FIG. 11. The fourth embodiment is different from the third embodiment in terms of positions where the adhesive A is applied to fix the reinforcing members 25A, 35A. The other components of the fourth embodiment are the same as those of the third embodiment, and therefore, are denoted by the same reference signs in the drawing, and the description thereof is omitted.

As illustrated in FIG. 11, in the fourth embodiment, the reinforcing member 25A attached to the parallelly movable panel assembly 20 has the protruding portion 257. As in the third embodiment, the widthwise surface belonging to the protruding portion 257 and facing the exterior side Y1 is fixed to the widthwise surface belonging to the exterior-side glass plate 21 and facing the interior side Y2 (inside) with an adhesive A. Instead of the configuration of the third embodiment in which the widthwise surface belonging to the protruding portion 258 and facing the interior side Y2 is fixed to the widthwise surface belonging to the interior-side glass plate 23 and facing the exterior side Y1 (inside) with the adhesive A, the reinforcing member 25A of the parallelly movable panel assembly 20 of the fourth embodiment has a configuration in which the widthwise surface belonging to the interior-side widthwise surface reinforcing portion 255 and facing the exterior side Y1 is fixed to the widthwise surface belonging to the interior-side glass plate 23 and facing the interior side Y2 (outside) with the adhesive A.

In the fourth embodiment, the reinforcing member 35A attached to the slidably movable panel assembly 30 has the protruding portion 357. As in the third embodiment, the widthwise surface belonging to the protruding portion 357 and facing the interior side Y2 is fixed to the widthwise surface belonging to the interior-side glass plate 33 and facing the exterior side Y1 (inside) with an adhesive A. Instead of the configuration of the third embodiment in which the widthwise surface belonging to the protruding portion 358 and facing the exterior side Y1 is fixed to the widthwise surface belonging to the exterior-side glass plate 31 and facing the interior side Y2 (inside) with the adhesive A, the reinforcing member 35A attached to the slidably movable panel assembly 30 of the fourth embodiment has a configuration in which the widthwise surface belonging to the exterior-side widthwise surface reinforcing portion 355 and facing the interior side Y2 is fixed to the widthwise surface belonging to the exterior-side glass plate 31 and facing the exterior side Y1 (outside) with the adhesive A.

In the foregoing, preferred embodiments of the present disclosure have been described. It should be noted that the present disclosure is not limited to the above-described embodiments, and appropriate modifications can be made to the present disclosure.

In the above embodiments, the upper end portion and the lower end portion of each of the parallelly movable panel assembly 20, the slidably movable panel assembly 30, and the FIX panel assembly 40 (multi-layered glass) are provided with only the spacers, without a reinforcing member, although not shown. However, this is a non-limiting example. The upper end portion and the lower end portion of each of the parallelly movable panel assembly 20, the slidably movable panel assembly 30, and the FIX panel assembly 40 (multi-layered glass) may be provided with the spacers and the reinforcing members, likewise to both end portions in the lateral direction X, which are provided with the spacers and the reinforce members.

### EXPLANATION OF REFERENCE NUMERALS

20: Parallelly movable panel assembly (multi-layered glass)
30: Slidably movable panel assembly (multi-layered glass)
40: FIX panel assembly (multi-layered glass)
21, 31, 41: Exterior-side glass plate (glass plate)
22, 32, 42: Intermediate glass plate (glass plate)
23, 33, 43: Interior-side glass plate (glass plate)
24, 34, 44: Spacer
25, 35, 45: Reinforcing member
28, 38, 48: Airtight member
251, 351, 451: Exterior-side widthwise surface reinforcing portion (one-side widthwise surface reinforcing portion, widthwise surface reinforcing portion)
252, 352, 452: Depth-wise surface reinforcing portion
253, 353, 453: Interior-side widthwise surface reinforcing portion
253, 353, 453 (other-side widthwise surface reinforcing portion, widthwise surface reinforcing portion)

## Claims

1. A multi-layered glass in which at least two glass plates are arranged with a spacer interposed therebetween, the multi-layered glass comprising:
a reinforcing member constituted by carbon fiber-reinforced plastic and disposed at an end portion in a widthwise direction of the multi-layered glass, wherein
the reinforcing member includes:
a widthwise surface reinforcing portion that is disposed externally with respect to a depth-wise direction along a widthwise surface at the end portion in the widthwise direction of the multi-layered glass; and
a depth-wise surface reinforcing portion that is continuous with the widthwise surface reinforcing portion and disposed along a depth-wise surface at the end portion in the widthwise direction of the multi-layered glass.

2. The multi-layered glass according to claim 1, wherein
the widthwise surface reinforcing portion includes:
a one-side widthwise surface reinforcing portion that is disposed externally along the widthwise surface belonging to the multi-layered glass and facing one side in the depth-wise direction; and
an other-side widthwise surface reinforcing portion that is disposed externally along the widthwise surface belonging to the multi-layered glass and facing an other side in the depth-wise direction, and wherein
the one-side widthwise surface reinforcing portion, the depth-wise surface reinforcing portion, and the other-side widthwise surface reinforcing portion are continuous with each other to thereby form the reinforcing member having a U-shape in a cross-sectional view.

3. The multi-layered glass according to claim 1 or 2, wherein the carbon fiber-reinforced plastic constituting the reinforcing member includes a bundle of plurality of fibers extending in a direction intersecting with a width direction of the reinforcing member and a resin fixing the bundle.

4. The multi-layered glass according to any one of claims 1 to 3, wherein
the depth-wise surface reinforcing portion is thicker than the widthwise surface reinforcing portion.

5. The multi-layered glass according to any one of claims 1 to 4, wherein
the depth-wise surface reinforcing portion has an airtight member that is attached to an outer depth-wise surface of the depth-wise surface reinforcing portion.

6. A fitting comprising:
a sash including the multi-layered glass according to any one of claims 1 to 5.
